# EUROPEAN PATENT SPECIFICATION

(11) **EP 0 687 713 B1**
(45) Date of publication and mention of the grant of the patent: **29.10.1997**
(21) Application number: 95300729.1
(22) Date of filing: 06.02.1995
(51) Int. Cl.: C09D 4/00, C09D 167/07, C08F 8/42

(54) **Radiation-curable oligomer-based coating composition**
Strahlungshärtbare Überzugszusammensetzung auf Oligomerbasis
Composition de revêtement durcissable par irradiation et à base d'oligomères

(30) Priority: 13.06.1994 US 259320
(43) Date of publication of application: 20.12.1995
(73) Proprietor: DOW CORNING CORPORATION, Midland Michigan 48686-0994 (US)
(72) Inventor: Blizzard, John Donald, Bay City, Michigan (US); Tonge, James Steven, Sanford, Michigan (US)
(74) Representative: Kyle, Diana

(56) References cited:
- EP-A- 0 149 741
- EP-A- 0 423 713
- EP-A- 0 424 645
- EP-A- 0 588 508

## Description

The present invention relates generally to abrasion-resistant coatings and more particularly to such coatings that incorporate: 1) a Michael adduct formed from a multifunctional acrylate oligomer and an aminoalkoxysilane; and 2) colloidal silica.

Numerous compositions for forming abrasion-resistant coatings on various types of substrates are well-known in the art. Such abrasion-resistant coatings are frequently applied over polycarbonate substrates, which may be used as a substitute for glass, as in the case of lenses for automobile head lamps. Other uses include treatments for wood, paper products and labels, such as those that bear bar codes.

Silicone compositions of this type are disclosed in US-A 4,455,205 to Olson et al., issued June 19, 1984. Those coatings comprise an ultraviolet light-curable (UV-curable) composition prepared from a multifunctional acrylate monomer, an acryloxyfunctional silane and aqueous colloidal silica in a polar solvent. After mixing the components, the solvent and remaining water are removed in vacuo, with gentle heating, a step which is termed "stripping." A photoinitiator can be added and the composition UV-cured.

Similarly, US-A 4,486,504 to Chung, issued December 4, 1984, describes a UV-curable composition prepared from the addition of a multifunctional acrylate monomer to a mixture of acryloxyfunctional silanes and/or glycidoxyfunctional silanes and aqueous colloidal silica. With the addition of a photoinitiator, the composition may be UV-cured after stripping.

US-A 5,260,350 to Wright, issued November 9, 1993, claims a radiation-curable abrasion-resistant coating formulated from: a Michael adduct formed from an aminoalkoxysilane and a multifunctional acrylate monomer; and colloidal silica. The coating produced thereby has excellent stain and abrasion resistance. The abrasion resistance is augmented by the inclusion of substantial quantities of colloidal silica (between 30 and 40 weight percent) in the composition.

The formulation of Wright is carried out in a polar solvent, such as isopropyl alcohol and the colloidal silica is generally added in the form of an aqueous dispersion. The water in the dispersion promotes hydrolysis of the aminoalkoxysilanes. The water and polar solvent are preferably stripped from the formulation and curing of the resulting composition is then carried out by free-radical polymerization of the acrylate groups.

A drawback associated with the composition of Wright is the need to use relatively low molecular weight and volatile multifunctional acrylate monomers. Also, the use of such monomers poses substantial health risks because of toxicity and special precautions must be taken when formulating the composition.

In Modern Paint and Coatings, June 1992, pp 44-48, "Testing UV-Cure Coatings Systems For Wood", Mahon et al., teach the use of radiation-curable multifunctional acrylate oligomers for coating flooring materials. Commonly used oligomers for this application include: epoxy acrylates; aliphatic urethane acrylates; aromatic urethane acrylates; and polyester acrylates. These oligomers are relatively inexpensive and have been used to coat vinyl sheet and tile flooring materials. Hereinafter aromatic and aliphatic urethane acrylates are collectively referred to as "urethane acrylates."

For vinyl sheet flooring, coatings of the aliphatic urethane acrylate-type readily survive the deformation imposed by the practice of storing such materials in rolls. Coatings of this type, however, suffer from the drawback of exhibiting less than desirable stain and abrasion resistance.

In the case of wood flooring, coating flexibility may not be a particularly important feature. However, some coating compositions, such as the polyester acrylate-type, exhibit very poor adhesion and abrasion resistance.

Contrastingly, coatings of the multifunctional acrylate oligomer-type in virtually all cases fail to provide the desired level of stain protection. Furthermore, the high viscosity of many of these materials require the use of a volatile organic solvent (VOC) to render a usable coating.

US-A 5,091,465 to Dana et al., issued on February 25, 1992, uses silylated polyester resins comprising the Michael adduct of an aminoorganosilane and a conjugated polyester resin. The polyester resin of Dana is said to be useful as a sizing for glass fiber reinforcement of polyester composites.

US-A 5,232,993 to Shah et al., issued on August 3, 1993, shows the use of an epoxy compound and acrylate-terminated polyurethane in combination with an amine hardener as an adhesive composition.

US-A 4,430,486 to Chang et al., issued on February 7, 1984, shows a film-forming resin made from a multifunctional urethane acrylate and an aminoalkoxysilane. The compositions of Chang, however, have a strong tendency to gel during formulation and do not provide a high level of abrasion resistance.

Those skilled in the art will recognize that the terms "oligomer" and "polymer" are frequently used interchangeably. Although the term "oligomer" is generally used to describe a relatively short polymer, the term has no generally accepted definition with respect to the number of repeating monomer units. As used herein to describe multifunctional acrylates, the terms "oligomer" and "polymer" are meant to be interchangeable, the only caveat being that the oligomer or polymer must be capable of use in the invention taught herein.

It is also well-known in the art that coating compositions that are UV-curable are generally also curable by other means such as exposure to an electron beam or heat. Accordingly, as used herein the term "radiation-curable" is meant to encompass coatings that are curable by all such means.

We have overcome the drawbacks of the prior art by providing a composition that is easily formulated and, upon curing, forms a transparent, stain-resistant, adherent and abrasion-resistant coating.

In our United States Patent Application Serial No. 08/193,335, regarding an abrasion-resistant coating composition, we showed that blends of (A) multifunctional acrylate oligomers and (B) a silane-based composition, provide cured coating compositions which have certain improved properties, such as adhesion, abrasion resistance and stain resistance. The silane-based composition (B) comprised: a Michael adduct formed from an aminoalkoxysilane and a multifunctional acrylate monomer; and colloidal silica. The silane-based composition (B) was blended with (A) the multifunctional acrylate oligomer which was selected from the group consisting of epoxy acrylates, urethane acrylates, polyester acrylates and admixtures thereof.

We have now found that a radiation-curable composition that forms adherent, abrasion- and stain- resistant cured coatings can be made by: reacting a multifunctional acrylate oligomer (as opposed to a multifunctional acrylate monomer) and an aminoalkoxysilane to form a Michael adduct; and then combining the same with colloidal silica.

In the present invention, there is provided a radiation-curable oligomer-based composition for forming an abrasion-resistant coating on a substrate, the composition comprising:
(A) at least one multifunctional acrylate oligomer selected`from epoxy acrylates, urethane acrylates, polyester acrylates and admixtures thereof; and
(B) an aminoalkoxysilane having the following formula: 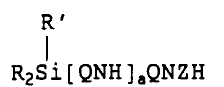 wherein
   - R: is an alkoxy or alkyl group having 1 to 4 carbon atoms, which R groups may be the same or different;
   - R': is an alkoxy group;
   - Q: is a divalent hydrocarbon group, which Q groups may be the same or different;
   - a: is 0 or 1; and
   - Z: is hydrogen or a monovalent hydrocarbon group; and
(C) colloidal silica;

The multifunctional acrylate oligomer (A) is present in an amount greater than a two-to-one, and preferably a ten-to-one, Michael adduct equivalency with respect to the aminoalkoxysilane (B). Accordingly, substantially all the aminoalkoxysilane is reacted to form a Michael adduct.

The invention relates also to an article of manufacture comprising:
a substrate defining at least one surface;
said substrate having an abrasion-resistant coating formed on said at least one surface thereof;
said coating being formed by curing on said substrate a coated composition as defined above;
an article, wherein said substrate is optically clear and is fabricated from a clear substrate selected from polycarbonate, polyethylene terphthalate, glass, polystyrene and acrylic compounds;
an article, wherein said substrate is adapted for use as a flooring material selected from the group consisting of sheet vinyl, wood, polyvinylchloride and ceramics, and
an article, wherein said substrate is paper.

Upon curing, the composition of this invention produces a coating that offers a level of abrasion-resistance that is comparable to, or substantially better than, prior art coatings.

It is a surprising feature of the composition of our invention that it produces cured coatings having high abrasion resistance at a relatively low silica level when compared to compositions of the prior art.

It is another feature of the compositions of our invention that cured coatings can be produced therefrom having excellent physical properties, without the inclusion of molecular weight acrylate monomers.

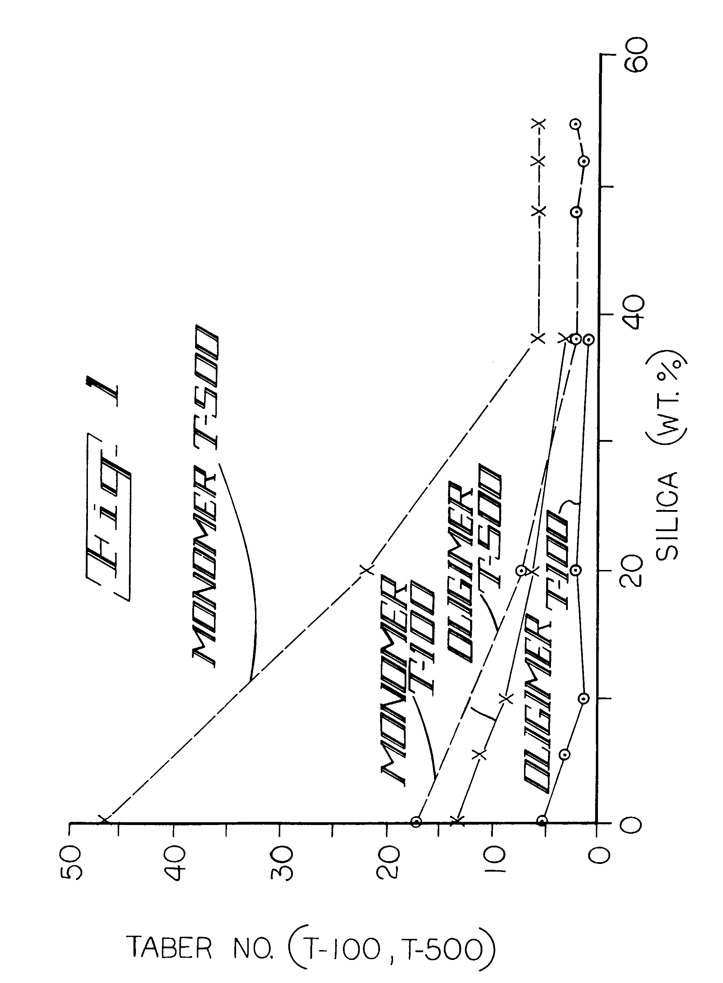

Fig. 1 is a graph illustrating the abrasion resistance of cured coating compositions, as measured by Taber Testing (T-100 and T-500) as a function of the level of silica solids. Cured coating compositions made in accordance with the present invention, in that they include a Michael adduct formed from (A) a multifunctional acrylate oligomer and (B) an aminoalkoxysilane are, therefore, designated as "Oligomer T-100 and Oligomer T-500." Cured coating compositions made from the teachings of Wright, in that they include a Michael adduct formed from an aminoalkoxysilane and a multifunctional acrylate monomer, are herein designated as "MONOMER T-100" and "MONOMER T-500."

Component (A) of this invention is as a multifunctional acrylate polymer selected from epoxy acrylates, urethane acrylates, polyester acrylates and admixtures thereof.

As used herein, the term "urethane acrylate" includes both aliphatic and aromatic urethane acrylates. Also as used herein, the term "multifunctional acrylate oligomer" is an oligomer which contains two or more functional groups selected from acryloxy or methacryloxy groups. The multifunctional acrylate oligomers may be used singly or in combination with other multifunctional acrylate oligomers.

Examples of some of the preferred multifunctional acrylate oligomers are as follows:
epoxy acrylates
   Bisphenol A epoxy diacrylate, available from Sartomer Company, Inc. of Exton PA. and sold under the designation CN104™. CN104™ has a viscosity of 3500 cps (mPa·s) at 65°C. and a specific gravity of 1.15. urethane acrylates
   Hexafunctional aromatic urethane acrylate with an acrylated polyol diluent which is sold under the designation Ebecryl® 220 by UBC Radcure, Inc. of Louisville, KY.
   Ebecryl® 220 has a number average molecular weight of 1,000 and a viscosity of 28,000 cps (mPa·s) at 25°C.
   Aliphatic urethane diacrylate which is available under the designation Ebecryl® 230 from UBC Radcure, Inc. of Louisville, KY. Ebecryl® 230 has a number average molecular weight of 5,000 and a viscosity of 40,000 (mPa·s) cps at 25°C.
polyester acrylate
   Tetrafunctional polyester acrylate which is sold under the designation Ebecryl® 80 by UBC Radcure, Inc. of Louisville, KY. Ebecryl® 80 has a number average molecular weight of 1,000 and a viscosity of 3,500 (mPa·s) cps at 25°C.

Component (B) is the aminoalkoxysilane having the previously-described general formula. Preferred examples of (B) include:
3-aminopropyltriethoxysilane;
3-aminopropyltrimethoxysilane;
3-aminopropylmethyldimethoxysilane; and
n-(2-aminoethyl)-3-aminopropyltrimethoxysilane

The above-listed aminoalkoxysilanes are commercially available from Huls America, Inc., Bristol, PA.

Based upon cost considerations and ease of formulation, the use of monoaminofunctional trialkoxysilanes is most preferred for preparing the compositions of this invention.

The multifunctional acrylate oligomer (A) is first dissolved in a polar solvent, such as isopropyl alcohol. The aminoalkoxysilane (B) is then slowly added to the solution under conditions of constant agitation.

The molar ratio of multifunctional acrylate oligomer (A) to the aminoalkoxysilane (B) must be such that the acrylate (A) is present in an amount which is at least sufficient to form a two-to-one Michael adduct equivalency. Because one amine group reacts with one acrylate group to form a Michael adduct, and because it is desirable to have at least one unreacted acrylate group on the Michael adduct to effect radiation curing of the composition, a one-to-one molar ratio of a diacrylate to an monoaminoalkoxysilane yields a two-to-one Michael adduct equivalency.

In preferred compositions of the invention, the Michael adduct equivalency between components (A) and (B) is as high as ten-to-one or greater. In other words, the use of multifunctional acrylate monomer (A) in an amount substantially in excess of that which can react with the aminoalkoxysilane (B) to form the Michael adduct, has no deleterious and often only beneficial effects on the composition of the invention.

Component (C) of our composition is silica in the form of a colloidal dispersion. Colloidal silica is a dispersion of submicrometer-sized silica (SiO₂) particles in an aqueous or other solvent medium (such as alcohol or other organic solvent which may be combined with water). Aqueous colloidal silica is preferably blended with isopropyl alcohol before being added to the Michael adduct.

Colloidal silica is available in acidic or basic form. Although either form may be utilized, basic colloidal silicas should first be acidified by means such as an organic acid, to avoid gelling the composition of our invention or causing the silica therein to precipitate from colloidal dispersion.

Likewise, the residual alkalinity of the Michael adduct solution should be neutralized before the addition of the colloidal silica dispersion. Without such neutralization, the Michael adduct solution is likely to gel or the silica is likely to precipitate from colloidal dispersion. Acrylic acid and acetic acid, added to lower the pH of the Michael solution to 5 to 6, are satisfactory for avoiding such deleterious results.

Examples of satisfactory colloidal silicas for use in the composition of the invention include Nalco® 1034A, Nalco® 1057 and Nalco® 1129 all of which can be obtained from Nalco Chemical Company, Naperville, IL.

Nalco® 1034A has a mean particle size of 20 nm, an SiO₂ content of approximately 34% by weight in water and a pH of approximately 3.1. Nalco® 1057 has a mean particle size of 20nm and an SiO₂ content of approximately 30% by weight in a solution of propoxyethanol. Nalco® 1129 has a mean particle size of 20nm and an SiO₂ content of approximately 30% by weight in a solution of 40% 2-propanol (IPA) and 30% water. Unless otherwise stated, as reported herein the weight percents or parts of colloidal silica in the composition of the invention do not include the weight of liquid dispersant.

In a preferred embodiment of the invention, one or more acrylate-terminated polyoxyalkylenes is added to the composition and the water and polar solvent are stripped therefrom. The acrylate-terminated polyoxyalkylenes are a reactive adjuvant that aid in stripping by lessening the tendency to gel and augment flexibility of the cured coating without sacrificing its abrasion resistance. Examples of suitable acrylate-terminated polyoxyalkylenes include:
diethyleneglycol diacrylate;
tetraethyleneglycol diacrylate; and
polyethyleneglycol diacrylate.

These monomers are all available from Sartomer Company, Inc. of Exton, PA and sold under the names Sartomer® 230, 268 and 344, respectively.

Butylated hydroxytoluene (BHT) and phenothiazine (PTZ) are known in the art as inhibitors of autopolymerization of acrylates and are preferably used in the formulation of our invention.

Other components can be added to the compositions of this invention to enhance the usefulness of the coatings. For example, known diluents (to adjust viscosity), leveling agents, photoinitiators, ultraviolet light absorbers, dyes and the like, can be included.

Our composition of this invention may be applied to substrates by known methods such as flow coating, dip coating, spin coating, spray coating or curtain coating. A coating thickness between 3-25 micrometers, and preferably 5 micrometers, is recommended.

Various examples of the coating composition of the invention were prepared, coated over substrates (to a thickness of 5 µm) and UV-cured. As used herein to describe the preparation of examples of our invention, monomer-based coatings and comparative examples, the term "UV-cured" means that the coated substrate was subjected to 2,026 millijoules of UV radiation/cm².

The physical properties of the cured compositions, including abrasion resistance, stain resistance, adhesion were measured and compared with coating compositions of the prior art. The test procedures for various physical properties are described below.

Abrasion resistance was determined according to ASTM Method D-1044. The instrument used was a Teledyne™ Model 503 Taber Abrader with two 250 gram weights (500 gram load) for each of the CS10F abrasive wheels. In the ASTM method, coated polycarbonate Taber panels were subjected to 100 and 500 cycles on the abrader turntable (T-100 and T-500, respectively). The percent change in haze, which is the criterion for determining the abrasion resistance of the coating, was determined by measuring the difference in haze of the unabraded and abraded coatings. Haze is defined as the percentage of transmitted light which, in passing through the sample, deviates from the incident beam by forward scattering. In this method, only light flux that deviates more than 2.5 degrees on average is considered to be haze. The percent haze on the coatings was determined by ASTM Method D-1003. A Gardner Haze Meter was used and the haze was calculated by measuring the amount of diffused light, dividing by the amount of transmitted light and multiplying by one hundred.

It will be understood by those skilled in the art that this type of Taber abrasion testing is not limited to the use of polycarbonate test panels. In the event that a given composition does not adhere to a polycarbonate substrate, any other substantially transparent, preferably plastic, substrate may be used, so long as the composition adheres thereon.

Adhesion was measured by a cross-hatch adhesion test. A series of cross-hatched lines were scribed over one square inch (2.54 square cm) of the surface of a substrate coated with a cured experimental composition. The scribed lines are spaced approximately 1/10 inch (2.5 mm) apart so as to form 100 squares, measuring approximately 1/10 inch (2.5 mm) on a side. The scribed surface is covered with No. 600 Scotch® Brand adhesive tape which is pressed down firmly over the cross-hatched area. The tape is then withdrawn from the surface of the substrate with one rapid motion at a 90° angle. The action of applying and removing the tape is carried out three times, after which the specimen is observed. The number of squares remaining intact on the substrate is a measure of the adhesion of the experimental composition. The number of squares remaining intact is reported as a percentage of the total number of squares on the grid.

Stain tests were conducted on white vinyl sheet flooring material of 0.055 inch (0.1232 cm) thickness which was coated with experimental coating compositions to yield a cured coating thickness of 3 to 5 µm. The samples measured approximately 3 inch (7.62 cm) X 4 1/2 inch (11.4 cm) and were thoroughly cleaned before testing. A two inch (5.1 cm) square of a single layer of absorbent paper (white, facial tissue grade or toilet paper) was placed in the center of the sample. A solution of 0.5% Yellow N (#4957) dye in kerosene was dripped on the paper with a medicine dropper. Five drops of solution were used to soak the paper without causing excess dye to contact the sample. Any air bubbles under the absorbent paper were worked out with a glass rod or spatula and the dye was allowed to remain in contact with the sample for thirty (30) minutes.

After 30 minutes, the area was wiped dry of dye solution and visually compared to an untreated specimen. The amount of staining on the test specimens was rated by index from 0 to 5, with 0 corresponding to no staining and 5 corresponding to a stain substantially as dark as the staining dye itself.

### Examples

### Hexafunctional Aromatic Urethane Acrylate-Based Coatings

These examples of our invention were formulated by dissolving 29.5 g of a hexafunctional aromatic urethane acrylate (having a number average molecular weight of 1,000, a viscosity of 28,000 cps (mPa·s) at 25°C., containing an acrylated polyol diluent, available from UCB Radcure Inc. of Louisville KY and sold as Ebecryl® 220) and 0.04 g phenothiazine in 55 g of isopropyl alcohol. The solution was mixed for 15 minutes and 3.90 g of aminopropyltriethoxysilane was slowly added thereto under conditions of agitation. This solution was permitted to mix for about 60 minutes before 6.86 g of acrylic acid was slowly added. The acrylic acid was added to neutralize the residual alkalinity imparted by the aminopropyltriethoxysilane, bringing the pH of the solution from 9 to between 5 and 6.

Thereafter varying amounts of colloidal silica (Nalcoag® 1034 A, having a silica solids content of 34 weight percent) diluted with 20 more g of isopropyl alcohol, were added to the solution which was then mixed for an additional 60 minutes. This yielded a final solution having a pH between 4 and 6 to which was added 12.9 g. of diethyleneglycoldiacrylate. The solution was vacuum stripped of volatiles at a pressure of 24 - 29 mm Hg (3.2 - 3.9 kPa) and at a temperature of 70°C. Four weight percent of 2-hydroxy-2-methyl-1-phenyl-propan-1-one, a photoinitiator (available from Ciba Geigy Corp. of Hawthorne NY and sold under the name Darocur® 1173,) was added to the stripped composition which was then applied to and UV-cured on polycarbonate sheet substrates. The physical properties of the cured coating were tested as described below.

The amount of colloidal silica in the various formulations was varied to yield compositions having from 0 to 38 weight percent silica solids. The results of abrasion resistance testing were as follows:

| Example No. | Weight Percent Silica Solids | T-100 Oligomer | T-500 Oligomer | Adhesion (percent) | Stain Index |
|---|---|---|---|---|---|
| 1 | 0 | 4.8 | 12.8 | 0 | 3 |
| 2 | 5 | 3.0 | 11.9 | 100 | 2 |
| 3 | 10 | 2.6 | 9.3 | 100 | 0 |
| 4 | 20 | 3.3 | 7.3 | 100 | 0 |
| 5 | 38 | 2.5 | 6.6 | 100 | 0 |

Examples of coating compositions, prepared in accordance with our copending United States Application Serial No. 07/839,007, were produced by dissolving 21.7 g trimethylolpropanetriacrylate 7.8 g hexanedioldiacrylate and 0.04 g. butylated hydroxytoluene in 55 g of isopropyl alcohol. The solution was mixed for 15 minutes and 6.24 g of aminopropyltriethoxysilane were slowly added thereto under conditions of agitation. This solution was permitted to mix for 60 minutes before 6.86 g of acrylic acid was slowly added, bringing the pH of the solution from 9 to between 5 and 6.

Thereafter varying amounts of colloidal silica (Nalcoag® 1034 A), diluted with 20 more g of isopropyl alcohol, were added to the solution and mixed for an additional 60 minutes. This yielded a final solution having a pH between 4 and 6 to which was added 12.9 g. of diethyleneglycoldiacrylate. The solution was vacuum stripped of volatiles at a pressure of 24 - 29 mm Hg (3.2 3.9 kPa) and at a temperature of 70°C. Four weight percent of 2-hydroxy-2-methyl-1-phenyl-propan-1-one, a photoinitiator, was added to the composition which was then coated and UV-cured on polycarbonate substrates.

The amount of colloidal silica in the various formulations was varied to yield compositions having from 0 to 55 weight percent silica solids. The results of abrasion resistance testing were as follows:

| Example No. | Weight Percent Silica Solids | T-100 Monomer | T-500 Monomer |
|---|---|---|---|
| 1 | 0 | 17.0 | 46.2 |
| 2 | 20 | 7.0 | 21.7 |
| 3 | 38 | 3.0 | 7.5 |
| 4 | 48 | 2.8 | 7.2 |
| 5 | 52 | 2.2 | 7.0 |
| 6 | 55 | 2.6 | 7.1 |

Referring now to Fig. 1, there is plotted the abrasion resistance (T-100 and T-500) for each of the above examples of the invention (oligomer-based coatings) and monomer-based coatings (prior art), as a function of the silica solids content of each of the formulations. From the graph in Fig. 1, it is clear that the oligomer-based coatings of the invention yield highly abrasion resistant coatings (i.e. T-100 being less than or equal to 5 and T-500 being less than or equal to 10) at silica solids levels substantially below the levels required to obtain comparable results for monomer-based coatings.

### Difunctional Epoxy Acrylate-Based Coatings

Examples of this embodiment of our invention were formulated by dissolving 29.5 g of a difunctional epoxy acrylate (available from Sartomer, Inc. of Exton PA and sold under the designation CN104™) and 0.04 g phenothiazine in 55 g of isopropyl alcohol. The solution was mixed for 15 minutes and 1.55 g of aminopropyltriethoxysilane was slowly added thereto under conditions of agitation. This solution was permitted to mix for 60 minutes before 3.40 g of acrylic acid was slowly added, bringing the pH of the solution from 9 to between 5 and 6.

Thereafter varying amounts of colloidal silica (Nalcoag® 1034 A), diluted with 20 more g of isopropyl alcohol, were added to the solution which was then mixed for an additional 60 minutes. This yielded a final solution having a pH between 4 and 6 to which was added 12.9 g. of diethyleneglycoldiacrylate. The solution was vacuum stripped of volatiles at a pressure of 24 - 29 mm Hg (3.2 3.9 kPa) and at a temperature of 70°C. Four weight percent of 2-hydroxy-2-methyl-1-phenyl-propan-1-one, a photoinitiator, was added to the stripped composition which was then applied to and UV-cured on polycarbonate sheet substrates and tested for adhesion and abrasion resistance.

The amount of colloidal silica in the various formulations was varied to yield compositions having from 20 and 38 weight percent silica solids. The results of abrasion resistance testing were as follows:

| Example No. | Weight Percent Silica Solids | T-100 Oligomer | T-500 Oligomer | Adhesion (percent) |
|---|---|---|---|---|
| 6 | 20 | 5.5 | 13.2 | 100 |
| 7 | 38 | 3.2 | 10.7 | 100 |

### Aliphatic Urethane Diacrylate-Based Coatings

Examples of this embodiment of the invention were formulated by dissolving 74.0 g of a difunctional aliphatic urethane acrylate (having a number average molecular weight of 5,000 available from UCB Radcure, Inc of Louisville KY and sold under the mark Ebecryl® 230) and 0.04 g phenothiazine in 55 g of isopropyl alcohol. The solution was mixed for 15 minutes and 3.9 g of aminopropyltriethoxysilane was slowly added thereto under conditions of agitation. This solution was permitted to mix for 60 minutes before 8.0 g of acrylic acid was slowly added, bringing the pH of the solution from 9 to between 5 and 6.

Thereafter, 38.8 g of colloidal silica (Nalcoag® 1034 A) diluted with 20 more g of isopropyl alcohol, were added to the solution which was then mixed for an additional 60 minutes. This yielded a final solution having a pH between 4 and 6 to which was added 32.3 g of diethyleneglycoldiacrylate. The solution was vacuum stripped of volatiles at a pressure of 24 - 29 mm Hg (3.2 - 3.9 kPa) and at a temperature of 70°C. Four weight percent of 2-hydroxy-2-methyl-1-phenyl-propan-1-one, a photoinitiator, was added to the stripped composition which was then applied to and UV-cured on polycarbonate sheet substrates and tested for adhesion and abrasion resistance.

The cured coating exhibited 100 percent adhesion to the substrate and superior abrasion resistance, having Taber values of T-100 = 1.3 and T-500 = 6.7

### Diamine/Hexafunctioanl Aromatic Urethane Acrylate-Based Coatings

This example of the invention was formulated by dissolving 29.5 g of a hexafunctional aromatic urethane acrylate (having a number average molecular weight of 1,000, a viscosity of 28,000 cps (mPa·s) at 25°C., containing an acrylated polyol diluent, available from UCB Radcure Inc. of Louisville KY and sold as Ebecryl® 220) and 0.04 g phenothiazine in 55 g of isopropyl alcohol. The solution was mixed for 15 minutes and 1.55 g of N-(2 amino ethyl)-3-aminopropyltrimethoxy silane was slowly added thereto under conditions of agitation. This solution was permitted to mix for 60 minutes before 3.40 g of acrylic acid was slowly added, bringing the pH of the solution down from 9 to between 5 and 6.

Thereafter 32.24 g of colloidal silica (Nalcoag® 1034 A) diluted with 20 more g of isopropyl alcohol, were added to the solution which was then mixed for an additional 60 minutes. This yielded a final solution having a pH between 4 and 6 to which was added 12.9 g. of diethyleneglycoldiacrylate. The solution was vacuum stripped of volatiles at a pressure of 24 - 29 mm Hg (3.2 - 3.9 kPa) and at a temperature of 70°C. Four weight percent of 2-hydroxy-2-methyl-1-phenyl-propan-1-one, a photoinitiator, was added to the stripped composition which was then applied to and UV-cured on polycarbonate sheet substrates and tested for abrasion resistance.

The results of abrasion resistance testing were T-100 = 2.5 and T-500 = 7.3.

From the preceding examples it can be seen that very useful abrasion- and stain-resistant, adherant coatings can be made from the compositions of our invention. Surprisingly, we found that the viscosity of the stripped compositions of this invention were substantially lower than the viscosities of the starting multifunctional acrylate oligomers. Thus, the coating compositions of our invention do not require the addition of organic diluents to render products suitable for application to a substrate for forming cured coatings of optimum thickness.

### Comparative Examples

According to Example 1 of US-A 4,430,486 (col 8, lines 65+) we prepared a number of compositions, all of which proved unsatisfactory.

40.00 g of a hexafunctional aromatic urethane acrylate (Ebecryl_ 220) was dissolved in 28.43 g of ethanol. To this solution was added 12.63 g of aminopropyltriethoxysilane, in a dropwise manner and under agitation. This should have yielded a reaction product characterized in having an acrylate content of 0.324 milliequivalents per gram. The solution, however, gelled immediately upon the addition of the aminoalkoxysilane.

40.00 g of an hexafunctional aliphatic urethane acrylate (in an acrylate polyol diluent and having a number average molecular weight of 1,000, a viscosity of 450 cps (mPa·s) at 65°C. and commercially available from UBC Radcure, Inc. of Louisville, KY under the designation Ebecryl® 8301) was blended with 28.43 g of ethanol. 12.63 g of aminopropyltriethoxysilane were added to this solution along with 4 weight percent of 2-hydroxy-2-methyl-1-phenyl-propan-1-one, a photoinitiator. This yielded an ungelled reaction product characterized by having an acrylate content of 0.324 milliequivalents per gram.

Attempts to add acrylic acid, colloidal silica (in an isopropyl/water dispersion) and diethyleneglycoldiacrylate resulted in gelling. Accordingly, the comparative composition without such additions was then coated and UV-cured on a polycarbonate test panel. The coating showed no adhesion to the substrate. Abrasion testing resulted in T-100 = 8.2 and T-500 = 51.9.

## Claims

1. A radiation-curable oligomer-based composition for forming an abrasion-resistant coating on a substrate, said composition comprising:
(A) at least one multifunctional acrylate oligomer selected from epoxy acrylates, urethane acrylates, polyester acrylates and admixtures thereof; and
(B) an aminoalkoxysilane having the following formula: 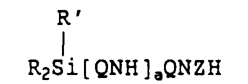 wherein
R is an alkoxy or alkyl group having 1 to 4 carbon atoms, which R groups may be the same or different;
R' is an alkoxy group;
Q is a divalent hydrocarbon group, which Q groups may be the same or different;
a is 0 or 1; and
Z is hydrogen or a monovalent hydrocarbon group; and
(C) colloidal silica;
said multifunctional acrylate oligomer (A) being present in an amount greater than a two-to-one Michael adduct equivalency with respect to said aminoalkoxysilane; and
substantially all of said aminoalkoxysilane being reacted with said multifunctional acrylate oligomer (A) to form a Michael adduct therefrom.

2. A composition in accordance with claim 1 wherein said colloidal silica (C) is present in an amount of 5 to 55 percent, by weight, of the combined weights of (A), (B) and (C).

3. A composition in accordance with claim 2 wherein said colloidal silica (C) is present in an amount of 38 percent by weight, of the combined weights of (A), (B) and (C).

4. A composition in accordance with claim 1 wherein said colloidal silica (C) is present in an amount of 10 percent by weight, of the combined weights of (A), (B) and (C); and said multifunctional acrylate oligomer (A) is a hexafunctional aromatic urethane acrylate.

5. A composition in accordance with claim 4 which, when cured, exhibits a Taber abrasion resistance of T-100 of 5 or less and a T-500 of 10 or less.

6. A composition in accordance with claim 1 wherein the Michael adduct equivalency between Components (A) and (B) is ten-to-one.

7. A composition in accordance with claim 1 wherein component (B) is selected from 3-aminopropyltriethoxysilane; 3-aminopropyltrimethoxysilane; 3-aminopropylmethyldimethoxysilane; n-(2-aminoethyl)-3-aminopropyltrimethoxysilane; and mixtures thereof.

8. A composition in accordance with claim 1 further comprising effective amounts of a photoinitiator wherein said photoinitiator is 2-hydroxy-2-methyl-1-phenyl-propan-1-one.

9. A composition in accordance with claim 1 further comprising (D) one or more acrylate-terminated polyalkylene oxides, in an amount of 17 weight percent of the sum of the weights of components (A), (B), (C) and (D).

10. An article of manufacture comprising:
a substrate defining at least one surface;
said substrate having an abrasion-resistant coating formed on said at least one surface thereof;
said coating being formed by curing on said substrate a coated composition of claim 1.

11. An article in accordance with claim 10 wherein said substrate is optically clear and is fabricated from a clear substrate selected from polycarbonate, polyethylene terphthalate, glass, polystyrene and acrylic compounds.

12. An article in accordance with claim 10 wherein said substrate is adapted for use as a flooring material selected from the group consisting of sheet vinyl, wood, polyvinylchloride and ceramics.

13. An article in accordance with claim 10 wherein said substrate is paper.

## Patentansprüche

1. Durch Strahlung härtbare Zusammensetzung auf Oligomerbasis zur Ausbildung einer abriebresistenten Beschichtung auf einem Substrat, wobei die Zusammensetzung enthält:
(A) wenigstens ein multifunktionelles Acrylatoligomer, ausgewählt aus Epoxyacrylaten, Urethanacrylaten, Polyesteracrylaten und Mischungen davon, und
(B) ein Aminoalkoxysilan mit der folgenden Formel: 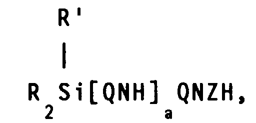 worin
R eine Alkoxy- oder Alkylgruppe mit 1-4 Kohlenstoffatomen ist, wobei die R-Gruppen gleich oder unterschiedlich sein können,
R' eine Alkoxygruppe ist,
Q eine zweibindige Kohlenwasserstoffgruppe ist, wobei die Q-Gruppen gleich oder unterschiedlich sein können,
a gleich 0 oder 1 ist und
Z Wasserstoff oder eine einbindige Kohlenwasserstoffgruppe ist und
(C) kolloidales Siliciumdioxid,
wobei dieses multifunktionelle Acrylatoligomer (A) in einer Menge vorhanden ist, die größer ist als die für eine 2:1 Äquivalenz bei der Michael-Addition bezüglich dieses Aminoalkoxysilans benötigte Menge, und
wobei im wesentlichen dieses gesamte Aminoalkoxysilan mit diesem multifunktionellen Acrylatoligomer (A) umgesetzt wird, um daraus ein Michael-Addukt auszubilden.

2. Zusammensetzung nach Anspruch 1, wobei dieses kolloidale Siliciumdioxid (C) in einer Menge von 5-55 Gew.-%, bezogen auf die kombinierten Massen von (A), (B) und (C), vorhanden ist.

3. Zusammensetzung nach Anspruch 2, wobei dieses kolloidale Siliciumdioxid (C) in einer Menge von 38 Gew.-%, bezogen auf die kombinierten Massen von (A), (B) und (C), vorhanden ist.

4. Zusammensetzung nach Anspruch 1, wobei dieses kolloidale Siliciumdioxid (C) in einer Menge von 10 Gew.-%, bezogen auf die kombinierten Massen von (A), (B) und (C), vorhanden ist und dieses multifunktionelle Acrylatoligomer (A) ein hexafunktionelles aromatisches Urethanacrylat ist.

5. Zusammensetzung nach Anspruch 4, welche, wenn gehärtet, eine Abriebbeständigkeit nach Taber T-100 von 5 oder weniger und nach Taber T-500 von 10 oder weniger aufweist.

6. Zusammensetzung nach Anspruch 1, wobei die Michael-Addukt-Äquivalenz zwischen den Komponenten (A) und (B) 10:1 beträgt.

7. Zusammensetzung nach Anspruch 1, wobei Komponente (B) aus 3-Aminopropyltriethoxysilan, 3-Aminopropyltrimethoxysilan, 3-Aminopropylmethyldimethoxysilan, n-(2-Aminoethyl)-3-aminopropyltrimethoxysilan und Mischungen davon ausgewählt ist.

8. Zusammensetzung nach Anspruch 1, die weiterhin eine wirksame Menge eines Photoinitiators enthält, wobei dieser Photoinitiator 2-Hydroxy-2-methyl-1-phenylpropan-1-on ist.

9. Zusammensetzung nach Anspruch 1, die weiterhin (D) ein oder mehrere Polyalkylenoxide mit endständigen Acrylatgruppen in einer Menge von 17 Gew.-%, bezogen auf die Summe der Massen der Komponenten (A), (B), (C) und (D), enthält.

10. Gegenstand mit einem Substrat, das wenigstens eine Oberfläche definiert, wobei dieses Substrat eine abriebbeständige Beschichtung aufweist, die auf dieser wenigstens einen Oberfläche davon ausgebildet ist, wobei diese Beschichtung durch Härten einer aufgetragenen Zusammensetzung nach Anspruch 1 auf diesem Substrat ausgebildet wird.

11. Gegenstand nach Anspruch 10, wobei dieses Substrat optisch klar ist und aus einem klaren Substrat, ausgewählt aus Polycarbonat, Polyethylenterephthalat, Glas, Polystyrol und Acrylverbindungen, hergestellt ist.

12. Gegenstand nach Anspruch 10, wobei dieses Substrat zur Verwendung als Bodenbelag, ausgewählt aus der Gruppe bestehend aus Vinylplatten, Holz, Polyvinylchlorid und keramischen Stoffen, angepaßt ist.

13. Gegenstand nach Anspruch 10, wobei dieses Substrat Papier ist.

## Revendications

1. Composition à base d'oligomère durcissable par une radiation pour former un revêtement résistant à l'abrasion sur un substrat, ladite composition comprenant :
(A) au moins un oligomère d'acrylate multifonctionnel choisi parmi les acrylates d'époxy, les acrylates d'uréthane, les acrylates de polyester et les mélanges de ceux-ci ; et
(B) un aminoalcoxysilane ayant la formule suivante : 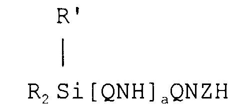 dans laquelle
R est un groupe alcoxy ou alkyle ayant 1 à 4 atomes de carbone, ces groupes R pouvant être identiques ou différents ;
R' est un groupe alcoxy ;
Q est un groupe hydrocarboné divalent, ces groupes Q pouvant être identiques ou différents ;
a est 0 ou 1 ; et
Z est un hydrogène ou un groupe hydrocarboné monovalent ; et
(C) de la silice colloïdale ;
ledit oligomère d'acrylate multifonctionnel (A) étant présent en une quantité supérieure à une équivalence du produit d'addition de Michael de deux-à-un par rapport audit aminoalcoxysilane ; et
substantiellement tout ledit aminoalcoxysilane ayant réagi avec ledit oligomère d'acrylate multifonctionnel (A) pour former un produit d'addition de Michael.

2. Composition selon la revendication 1, dans laquelle ladite silice colloïdale (C) est présente en une proportion de 5 à 55 %, en poids, par rapport aux poids combinés de (A), (B) et (C).

3. Composition selon la revendication 2, dans laquelle ladite silice colloïdale (C) est présente en une proportion de 38 % en poids par rapport aux poids combinés de (A), (B) et (C).

4. Composition selon la revendication 1, dans laquelle ladite silice colloïdale (C) est présente en une proportion de 10 % en poids par rapport aux poids combinés de (A), (B) et (C) ; et ledit oligomère d'acrylate multifonctionnel (A) est un acrylate d'uréthane aromatique hexafonctionnel.

5. Composition selon la revendication 4 qui, lorsqu'elle est durcie, présente une résistance à l'abrasion Taber T-100 de 5 ou moins et T-500 de 10 ou moins.

6. Composition selon la revendication 1, dans laquelle l'équivalence du produit d'addition de Michael entre les constituants (A) et(B) est de dix-à-un.

7. Composition selon la revendication 1, dans laquelle le constituant (B) est choisi parmi le 3-aminopropyltriéthoxysilane ; le 3-aminopropyltriméthoxysilane ; le 3-aminopropylméthyldiméthoxysilane ; le n-(2-aminoéthyl)-3-aminopropyltriméthoxysilane; et les mélanges de ceux-ci.

8. Composition selon la revendication 1, comprenant en outre des quantités efficaces d'un photoinitiateur, ledit initiateur étant la 2-hydroxy-2-méthyl-1-phénylpropan-1-one.

9. Composition selon la revendication 1, comprenant en outre (D) un ou plusieurs polyoxyalkylène à terminaisons acrylate, en une proportion de 17 % en poids par rapport à la somme des poids des constituants (A), (B), (C) et (D).

10. Article manufacturé, comprenant :
un substrat définissant au moins une surface ;
ledit substrat ayant un revêtement résistant à l'abrasion formé sur ladite au moins une surface de celui-ci ;
ledit revêtement étant formé en durcissant sur ledit substrat une composition appliquée de la revendication 1.

11. Article selon la revendication 10, dans lequel ledit substrat est optiquement transparent et est fabriqué à partir d'un substrat transparent choisi parmi un polycarbonate, un téréphtalate de polyéthylène, le verre, le polystyrène et les composés acryliques.

12. Article selon la revendication 10, dans lequel ledit substrat est adapté pour l'utilisation en tant que matériau de revêtement de sol choisi dans le groupe constitué par une feuille de vinyle, le bois, le chlorure de polyvinyle et les céramiques.

13. Article selon la revendication 10, dans lequel ledit substrat est le papier.
